# EUROPÄISCHE PATENTANMELDUNG

(11) **EP 0 891 697 A1**
(43) Veröffentlichungstag der Anmeldung: **20.01.1999**
(21) Anmeldenummer: 98113047.9
(22) Anmeldetag: 14.07.1998
(51) Int. Cl.: A01D 61/00

(54) **Gerät zum Ernten von Getreide**

(30) Priorität: 18.07.1997 DE 19730913
(71) Anmelder: Wiegert, Ludger, Dipl.-Ing., 48346 Ostbevern (DE)
(72) Erfinder: Wiegert, Ludger, Dipl.-Ing., 48346 Ostbevern (DE)
(74) Vertreter: Busse & Busse Patentanwälte

(57) **Zusammenfassung**

Das Gerät zum Ernten von Getreide und anderen Stengelpflanzen wird insbesondere als Vorsatzgerät für Mähdrescher (1) oder Feldhäcksler eingesetzt und umfaßt eine Schneidvorrichtung (5), einen mit seiner Vorderseite der Schneidvorrichtung (5) nachgeordneten Schneidtisch (6), eine dar Rückseite des Schneidtisches (6) zugeordnete, quergerichtete Förderschnecke (7) und eine oberhalb der Schneidvorrichtung (5) angeordnete Haspel (8). Es ist eine zweite Förderschnecke (13) vorgesehen, die sich parallel zur ersten Förderschnecke (7) erstreckt, in einer ersten Betriebsstellung in Fahrtrichtung (3) vor der ersten Förderschnecke (7) und hinter der Schneidvorrichtung (5) angeordnet ist und aus der ersten Betriebsstellung in eine zweite Betriebsstellung oberhalb dar ersten Förderschnecke (7) übeführt werden kann.

## Beschreibung

Die Erfindung bezieht sich auf ein Gerät zum Ernten von Getreide und anderen Stengelpflanzen gemäß dem Oberbegriff des Anspruchs 1.

Geräte dieser Art sind in verschiedenen Ausführungen bekannt (US-A-2,747,357, DD-A-66 978). Bei diesen bekannten Geräten hat der Schneidtisch eine parallel zur Fahrtrichtung des Gerätes beim Mähen gemessene Länge, die der Stengellänge üblicher Getreidesorten Rechnung trägt. Zur Anpassung des Gerätes an in der Stengellänge stark unterschiedliche Erntegüter ist es bekannt, einen verkürz- bzw. verlängerbaren Schneidtisch vorzusehen, mit dessen Hilfe der Abstand zwischen dem Schneidwerk und der quergerichteten Förderschnecken eingestellt werden kann. Statt dessen ist es auch bekannt (DE-A-40 21 030) einen Schneidtisch einer auch für langes Erntegut geeigneten Länge vorzusehen und den Abstand zwischen dem Schneidwerk und der quergerichteten Förderschnecke durch Verstellen der Lage der Förderschnecke in und entgegen Fahrtrichtung auf ein gewünschtes Maß einzustellen. Hierzu ist die Förderschnecke an Schwenkarmen hängend abgestützt. Weiterhin ist ein Gerät bekannt (US-A-3,451,530), bei dem oberhalb des Schneidtisches zwei parallel in Fahrtrichtung hintereinander ortsfest angeordnete Förderschnecken vorgesehen sind, die unabhängig von der Länge des jeweils gemähten Erntegutes stets gemeinsam auf dieses einwirken.

Die Erfindung befaßt sich mit dem Problem, bei einem Gerät der eingangs genannten Art eine Anpassungsmöglichkeit an Erntegüter stark unterschiedlicher Stengellänge mit geringem Bau- und Umstellungsaufwand zu schaffen.

Die Erfindung löst dieses Problem mit einem Gerät mit den Merkmalen des Anspruchs 1. Hinsichtlich wesentlicher weiterer Ausgestaltungen wird auf die Ansprüche 2 bis 8 verwiesen.

Das Gerät nach der Erfindung ermöglicht es, dem Schneidtisch eine auch für Sonderfrüchte ausreichende Länge vorzugeben. Die zweite Förderschnecke wird beim Mähen von kurzstengeligem Erntegut vor der der Rückseite des Schneidtisches zugeordneten ersten Förderschnecke positioniert, so daß beide Förderschnecken gemeinsam einen einwandfreien Materialfluß sichern. Bei der Ernte von langstengeligem Erntegut wird die zweite Förderschnecke in eine Betriebsstellung oberhalb der ersten Förderschnecke verbracht, so daß eine vergrößerte Schneidtischlänge zur Verfügung steht. Bedarfsweise kann die zweite Förderschnecke auch Zwischenstellungen zwischen ihrer ersten Betriebsstellung in Fahrtrichtung vor der ersten Förderschnecke und ihrer zweiten Betriebsstellung oberhalb der ersten Förderschnecke einnehmen. Die Umstellung erfolgt vorteilhaft mit Hilfe von mechanischen oder hydraulischen Stellgliedern durch Verschwenken um die Drehachse der ersten Förderschnecke. Beide Förderschnecken laufen bevorzugt synchron angetrieben um, wobei zweckmäßig der Abstand zwischen den Förderschnecken geringer ist als die Hälfte der Summe der Durchmesser ihrer Umhüllenden, so daß die Schneckenwindungen ineinandergreifen und einen besonders wirksamen Guttransport gewährleisten.

Weitere Einzelheiten und Wirkungen ergeben sich aus der nachfolgenden Beschreibung und der Zeichnung, in der ein Ausführungsbeispiel des Gegenstands der Erfindung schematisch näher veranschaulicht ist.

In der Zeichnung zeigen
- Fig. 1: einen Mähdrescher mit einem Erntegerät nach der Erfindung,
- Fig. 2: eine Einzeldarstellung des Erntegerätes mit in erster Betriebsstellung befindlicher zweiter Förderschnecke,
- Fig. 3: eine Ansicht ähnlich Fig. 2 zur Veranschaulichung der zweiten Förderschnecke in ihrer zweiten Betriebsstellung, und

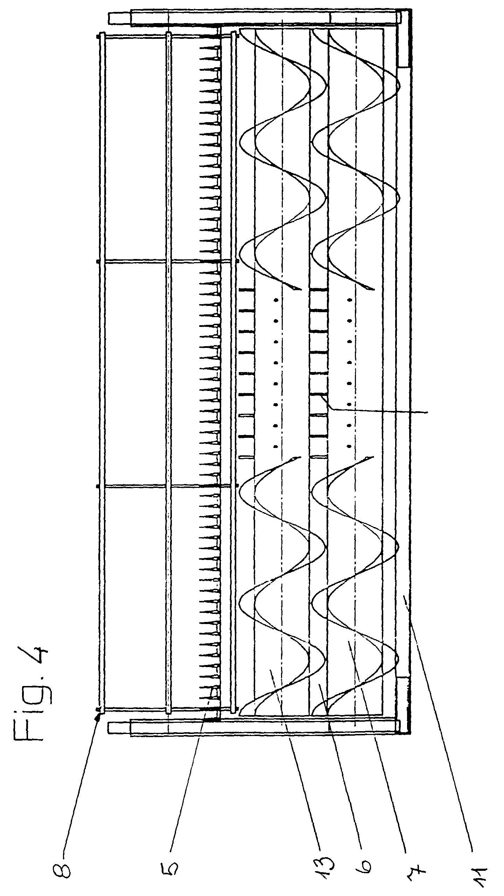

- Fig. 4: eine Draufsicht zu Fig. 2.

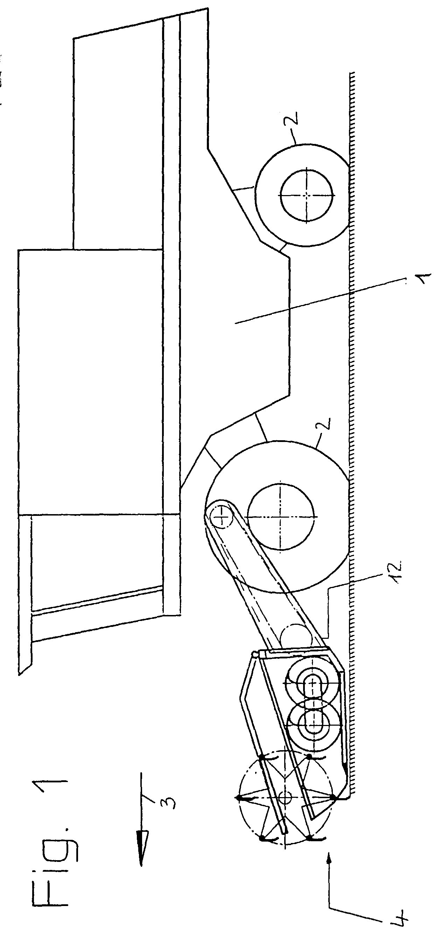

Fig. 1 veranschaulicht einen beispielsweise als Selbstfahrer ausgebildeten Mähdrescher 1, der sich über Räder 2 auf dem Boden abstützt und an seiner in Fahrtrichtung 3 vorderen Seite mit einem Vorsatzgerät 4 zum Ernten von Getreide und anderen Stengelpflanzen versehen ist. Das Erntegerät 4, das auch als unabhängige Einheit Anwendung finden oder auch als Vorsatzgerät für einen Feldhäcksler Anwendung finden kann, umfaßt eine Schneidvorrichtung 5, einen mit seiner Vorderseite der Schneidvorrichtung 5 nachgeordneten Schneidtisch 6, eine der Rückseite des Schneidtisches 6 zugeordnete, quergerichtete erste Förderschnecke 7 und eine oberhalb der Schneidvorrichtung 5 angeordnete Haspel 8, die um eine horizontale Querachse 9 durch nicht dargestellte Antriebsmittel angetrieben umlaufen kann und mit Zinken 10 bestückt ist. Die vorgenannten Teile bilden gemeinsam mit einem Maschinenrahmen 11 eine Baueinheit, die wie in Fig. 1 als Vorsatzgerät für einen Mähdrescher 1 o. dgl. zum Einsatz kommen kann. Bei einem derartigen Einsatz schließt sich an das Erntegerät 4 ein Weiterförderer 12 an, über den das Erntegut vom Erntegerät 4 in den Bearbeitungsteil des Mähdreschers 1 gelangt.

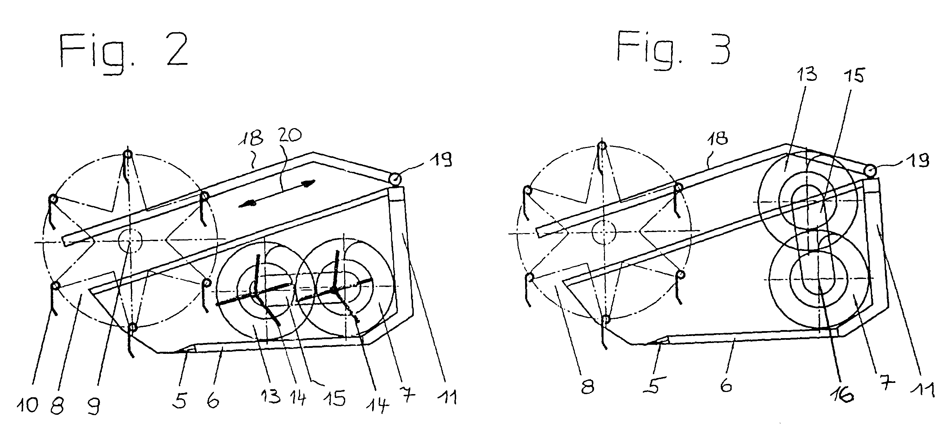

Der der Rückseite des Schneidtisches 6 benachbarten ersten Förderschnecke 7 ist eine zweite Förderschnecke 13 zugeordnet, die vorteilhaft in ihrer Ausbildung der ersten Förderschnecke 7 entspricht und ebenso wie diese um eine horizontale Querachse drehbar gelagert und mittels eines nicht näher veranschaulichten Antriebs in Fig. 1 bis 3 im Gegenuhrzeigersinne antreibbar ist. Beide Förderschnecken 7, 13 laufen bevorzugt synchron angetrieben um, um insbesondere bei Stellung der zweiten Förderschnecke 13 in ihrer ersten Betriebsstellung gemäß Fig. 2 Beeinträchtigungen des Fördervorganges durch unterschiedliche Umfangsgeschwindigkeiten zwischen den Förderschnecken 7,13 zu vermeiden. Der Abstand zwischen den Förderschnecken 7,13 ist vorteilhaft geringer als die Hälfte der Summe der Durchmesser ihrer Umhüllenden, so daß die Schneckengänge ineinandergreifen, d.h. ihre Arbeitskreise einander verschneiden. Die erste und die zweite Förderschnecke 7,13 können mit gesteuerten und/oder ungesteuerten Mitnehmerelementen 14, insbesondere Zinken, bestückt sein.

Die zweite Förderschnecke 13 ist beweglich abgestützt und aus ihrer ersten Betriebsstellung vor der ersten Förderschnecke 7 (Fig. 2) in eine zweite Betriebsstellung (Fig. 3) überführbar, in der sie sich über der ersten Förderschnecke 7 befindet. Auch Zwischenstellungen zwischen diesen beiden Betriebsstellungen sind im Bedarfsfalle möglich. Während die erste Betriebsstellung eingenommen wird, um im wesentlichen mehr oder weniger kurzstengeliges Erntegut zu ernten, ist die zweite Betriebsstellung für langstengeliges Erntegut vorgesehen. Bei der dargestellten bevorzugten Ausführungsform ist die zweite Förderschnecke 13 von Tragarmen 15 getragen, die um die Drehachse 16 der ersten Förderschnecke 7 mit Hilfe von nicht näher veranschaulichten mechanischen oder hydraulischen Stellgliedern schwenkbar ist. Bei dieser Art der Verstellung bleiben die Abstände der Förderschnecken 7,13 stets gleich, was auch die Antriebsübertragung vereinfacht.

Der ersten wie der zweiten Förderschnecke 7, 13 können nicht dargestellte Abstreifelemente zugeordnet sein, die Wickelbestrebungen des Erntegutes entgegenwirken.

Die Förderschnecke 13 ist, wie das ein Vergleich der Fig. 2 und 3 erkennen läßt, unabhängig von der Haspel 8 verstellbar, was durch eine entsprechende Gestaltung der Abstützelemente von Haspel 8 und Förderschnecken 7, 13 gewährleistet sein kann. Wenn wie üblich die Haspel 8 über ihre Tragarme 18 höhenverstellbar und in ihrem Abstand zu der Schwenkachse 19 der Tragarme 18 in Richtung der Pfeile 20 verstellbar ist, was beispielsweise mittels druckmittelbetätigten Stellantrieben erfolgen kann, dann kann gegebenenfalls eine Kollisionsgefahr zwischen Haspel 8 und zweiter Förderschnecke 13 entstehen. Um Kollisionen zu vermeiden, können der Haspel 8 und der zweiten Förderschnecke 13 Positions- bzw. Näherungssensoren zugeordnet sein, die über eine Steuer- oder Regelvorrichtung kollisionsbegründende Bewegungen ausschließen. Statt dessen oder zusätzlich können die Haspel 8 und/oder die zweite Förderschnecke 13 mit mechanischen und/oder hydraulischen Stellmitteln ausgerüstet sein, die bei Kollisionsgefahr diese durch Stellbewegungen, beispielsweise Vorverlegen der Haspel 8, verhindern.

## Patentansprüche

1. Gerät zum Ernten von Getreide und anderen Stengelpflanzen, insbesondere als Vorsatzgerät für Mähdrescher (1) oder Feldhäcksler, mit einer Schneidvorrichtung (5), einem mit seiner Vorderseite der Schneidvorrichtung (5) nachgeordneten Schneidtisch (6), einer der Rückseite des Schneidtisches (6) zugeordneten, quergerichteten Förderschnecke (7) und einer oberhalb der Schneidvorrichtung (5) angeordneten Haspel (8), **dadurch gekennzeichnet,** daß eine zweite Förderschnecke (13) vorgesehen ist, die sich parallel zur ersten Förderschnecke (7) erstreckt, in einer ersten Betriebsstellung in Fahrtrichtung (3) vor der ersten Förderschnecke (7) und hinter der Schneidvorrichtung (5) angeordnet und aus der ersten Betriebsstellung in eine zweite Betriebsstellung oberhalb der ersten Förderschnecke (7) überführbar ist.

2. Gerät nach Anspruch 1, **dadurch gekennzeichnet,** daß beide Förderschnecken (7,13) synchron angetrieben umlaufen.

3. Gerät nach Anspruch 1 und 2, **dadurch gekennzeichnet,** daß der Abstand zwischen den Förderschnecken (7,13) geringer ist als die Hälfte der Summe der Durchmesser ihrer Umhüllenden.

4. Gerät nach einem der Ansprüche 1 bis 3, **dadurch gekennzeichnet,** daß die zweite Förderschnecke (13) mit gesteuerten und/oder ungesteuerten Mitnehmerelementen (14) ausgestattet ist.

5. Gerät nach einem der Ansprüche 1 bis 4, **dadurch gekennzeichnet,** daß die zweite Förderschnecke (13) um die Drehachse (16) der ersten Förderschnecke (7) verschwenkbar ist.

6. Erntegerät nach einem der Ansprüche 1 bis 5, **dadurch gekennzeichnet,** daß zur Verstellung der zweiten Förderschnecke (13) mechanische oder hydraulische Stellglieder vorgesehen sind.

7. Gerät nach einem der Ansprüche 1 bis 6, **dadurch gekennzeichnet,** daß der zweiten Förderschnecke (13) Abstreifelemente zugeordnet sind.

8. Gerät nach einem der Ansprüche 1 bis 7, **dadurch gekennzeichnet,** daß die zweite Förderschnecke (13) unabhängig von der Haspel (8) verstellbar ist.
